# EUROPÄISCHE PATENTANMELDUNG

(11) **EP 3 745 572 A1**
(43) Veröffentlichungstag der Anmeldung: **02.12.2020**
(21) Anmeldenummer: 20173410.0
(22) Anmeldetag: 07.05.2020
(51) Int. Cl.: H02M 1/32, H02H 7/12, H02M 3/158

(54) **SCHALTUNGSANORDNUNG FÜR EIN TRAKTIONSSYSTEM**

(30) Priorität: 31.05.2019 DE 102019208000
(71) Anmelder: Siemens Mobility GmbH, 81739 München (DE)
(72) Erfinder: Eckert, Peter, 91058 Erlangen (DE)

(57) **Zusammenfassung**

Die Erfindung betrifft eine Schaltungsanordnung für ein Traktionssystem. Die Schaltungsanordnung hat einen elektrischen Energiespeicher, einen Stromrichter mit einer Induktivität und eine Schalt-Einrichtung. Ein Schutzpfad mit einer Freilaufdiode ist derart eingerichtet, dass bei Überschreiten einer bestimmten Spannung an der Schalt-Einrichtung die Freilaufdiode im Schutzpfad leitend ist und ein Strom, der durch eine in der Induktivität gespeicherte elektrische Energie hervorgerufen wird, in den Schutzpfad kommutiert. Ferner wird ein elektrisches Schienenfahrzeug mit einer solchen Schaltungsanordnung beschrieben.

## Beschreibung

Die Erfindung betrifft eine Schaltungsanordnung für ein Traktionssystem. Ferner betrifft die Erfindung ein elektrisches Schienenfahrzeug mit einer solchen Schaltungsanordnung.

Schaltungsanordnungen für Traktionssysteme, insbesondere Traktionssysteme elektrischer Fahrzeuge, umfassen einen Stromrichter (Steller), der einem Energiespeicher und einem Zwischenkreis des Traktionssystems zum Stellen der Spannung bzw. des Stroms zwischen dem Energiespeicher und dem Zwischenkreis zwischengeschaltet ist.

Der Stromrichter weist in der Regel eine Induktivität (Drossel) auf. Bei einem betrieblichen Energietransfer im Stromrichterkreis zwischen dem Energiespeicher und dem Zwischenkreis des Traktionssystems (z. B. für Antrieb oder Bremsen eines Elektromotors) fließt ein Strom durch die Induktivität. Dadurch ist in der Induktivität eine Energie (E = L/2 x I²) gespeichert, die beim Abschalten des Stroms in einer Komponente umgesetzt werden muss. Ohne den Freilaufkreis geschieht diese Energieumsetzung im Schalt-Lichtbogen des Schaltelementes und führt dort zu einem Verschleiß der Schaltkontakte. Dieser Verschleiß ist abhängig von der Höhe der Energie.

In einem Fehlerfall, in dem ein Kurzschluss im Stromrichter auftritt (z. B. bei Versagen eines Schaltelementes im Stromrichter), fließt ein hoher Strom durch die Induktivität.

Trotz der dann auftretenden Sättigung der Induktivität speichert diese aufgrund des hohen Stromflusses - gerade im Kurzschlussfall - eine hohe Energie. Beim Schalten des Stromrichterkreises durch eine Schalt-Einrichtung (z. B. Schaltelement oder Sicherung) können hohe Überspannungen entstehen und es muss die in der Induktivität gespeicherte Energie bzw. der weitergetriebene Strom abgebaut werden. Dies führt häufig zu einer Überlastung der Schalt-Einrichtung.

Eine gängige technische Maßnahme ist die Verwendung von entsprechend großen und teuren Schaltelementen mit Löschkammern für die beim Schalten entstehenden Lichtbögen. Bei Einsatz von Sicherungen können diese explosiv zerstört werden, falls die induktiv gespeicherte Energie die Abschaltfähigkeit der Sicherung übersteigt, was erhebliche Folgeschäden verursachen kann.

Bei Einsatz eines Filterkondensators im Stromrichterkreis kann in den obigen Situationen auch ein Umschwingen der in der Induktivität gespeicherten Energie zwischen der Induktivität und dem Filterkondensator auftreten. Dies kann erhebliche Folgeschäden verursachen, z. B. explosive Zerstörung des Filterkondensators oder Zerstörung von weiteren Stromrichterphasen durch den schwingenden Strom. Große Filterkondensatoren, die solche Energien aufnehmen können, benötigen jedoch sehr viel Platz. Ein solches Umschwingen der in der Induktivität gespeicherten Energie kann trotz Einsatz teurer Schalt-Einrichtungen nicht verhindert werden.

Es ist daher eine Aufgabe der Erfindung, eine Schaltungsanordnung sowie ein elektrisches Schienenfahrzeug mit einer solchen Schaltungsanordnung der oben erläuterten Art zu beschreiben, die einen verlässlichen Schutz der eingesetzten Schalt-Einrichtung ermöglichen und ein gezieltes Ableiten der in der Induktivität gespeicherten Energie ermöglichen.

Diese Aufgabe wird gemäß einem ersten Aspekt durch eine Schaltungsanordnung nach Patentanspruch 1 gelöst. Weitere Ausführungsformen und Implementierungen sind in abhängigen Patentansprüchen offenbart.

Die Schaltungsanordnung weist folgende Komponenten auf:
- einen elektrischen Energiespeicher,
- einen Stromrichter, der eine Induktivität aufweist, wobei der Stromrichter über einen ersten Anschluss und einen zweiten Anschluss mit dem Energiespeicher elektrisch zu einem Stromrichterkreis verschaltet ist und
wobei der Stromrichter einen ersten Zwischenkreisanschluss und einen zweiten Zwischenkreisanschluss zum Anschluss an das Traktionssystem aufweist,
- eine erste Schalt-Einrichtung, die im Stromrichterkreis verschaltet ist, und
- einen ersten Schutzpfad,
wobei im Schutzpfad eine erste Freilaufdiode derart verschaltet ist, dass bei Überschreiten einer bestimmten Spannung an der ersten Schalt-Einrichtung durch Auslösen der ersten Schalt-Einrichtung die Freilaufdiode im ersten Schutzpfad leitend ist und ein Strom im Stromrichterkreis, der durch eine in der Induktivität gespeicherte elektrische Energie hervorgerufen wird, mittels der leitenden ersten Freilaufdiode in den Schutzpfad kommutiert.

Eine Schaltungsanordnung dieser Art hat den technischen Effekt, dass bei Abschalten des Stromkreises dem durch die Induktivität des Stromrichters weiter getriebenen Strom ein Alternativpfad eröffnet wird. Ein Vorteil dieser Schaltungsanordnung ist dadurch gegeben, dass eine Funktion einer Überspannungsbegrenzung durch eine kostengünstige Freilaufdiode ermöglicht wird. Die Freilaufdiode ist derart verschaltet, dass im Normalbetrieb der Schaltungsanordnung (bei geschlossener bzw. nicht-ausgelöster Schalt-Einrichtung) eine Diodenspannung in Sperrrichtung an der Freilaufdiode anliegt und diese sperrt. Sobald eine Spannung an der Schalt-Einrichtung durch Auslösen bzw. Öffnen der Schalt-Einrichtung eine bestimmte Spannung übersteigt, ändert die Diodenspannung an der Freilaufdiode ihr Vorzeichen. Dann wird die Freilaufdiode leitend und übernimmt den von der Induktivität getriebenen Strom. Dieser fließt dann kontinuierlich abklingend weiter, bis die in der Induktivität gespeicherte Energie in den parasitären Widerständen (Diode, Induktivität, Leitungen) abgebaut ist. Somit erfüllt die im Schutzpfad eingerichtete Freilaufdiode eine Schutzfunktion der Schalt-Einrichtung gegen Überlastung durch den von der Induktivität getriebenen Strom. Dadurch werden hohe Brennspannungen bzw. entsprechend energiereiche Lichtbögen an der Schalt-Einrichtung beim Abschalten unterdrückt. Zusätzlich verhindert die im Schutzpfad eingerichtete Freilaufdiode ein Umschwingen elektrischer Energie zwischen der Induktivität und einem Filterkondensator, falls letzterer eingesetzt wird.

Ein weiterer Vorteil der Schaltungsanordnung ist dadurch gegeben, dass eine Entstehung von Überspannungen durch den Schutzpfad mit der darin verschalteten Freilaufdiode unterdrückt werden kann. Die Freilaufdiode muss lediglich auf ein Strommaximum im Stromrichterkreis und eine Grenzlast von I²t ausgelegt werden. Eine Abklingdauer des Stroms ist bei dieser Lösung zwar relativ lange, z. B. in einem Anwendungsfall bis ca. 150 ms. Eine entsprechende Freilaufdiode (z. B. Scheibendiode) ist aber in der Lage, den Strom zu tragen und stellt damit eine sehr einfache, kostengünstige und sehr sichere Lösung dar.

In diversen Ausführungsformen der Schaltungsanordnung ist die erste Schalt-Einrichtung zwischen dem ersten Anschluss des Energiespeichers und der Induktivität des Stromrichters verschaltet. Somit kann auf einfache Weise der Stromrichterkreis am ersten Anschluss des Energiespeichers aufgetrennt werden.

In einer ersten Ausführungsform der Schaltungsanordnung, in der die erste Schalt-Einrichtung zwischen dem ersten Anschluss des Energiespeichers und der Induktivität des Stromrichters verschaltet ist, ist der erste Schutzpfad mit einer elektrischen Verbindung zwischen der ersten Schalt-Einrichtung und der Induktivität des Stromrichters verbunden und mit dem zweiten Anschluss des Energiespeichers verbunden. Dies hat den Effekt, dass bei Schalten der ersten Schalt-Einrichtung der erste Schutzpfad einen Freilaufpfad bildet, der die Energiespeicher-seitige Schalt-Einrichtung wirksam von dem durch die Induktivität weiter getriebenen Strom entlastet.

Ferner ist diese Ausführungsform für einen Entladebetrieb des Energiespeichers ausgelegt, in dem Strom aus dem Energiespeicher entnommen wird und durch die ersten Schalt-Einrichtung sowie durch die Induktivität des Stromrichters in Richtung des Zwischenkreises fließt. Die erste Schalt-Einrichtung wird somit im Entladebetrieb des Energiespeichers, sowohl bei betrieblichem Abschalten als auch bei Abschalten in einem Fehlerfall, z. B. bei einem Entladekurzschluss im Stromrichter, wirksam geschützt.

Zudem wird durch Einrichten des ersten Schutzpfades in dieser Ausführungsform ein parallel zum ersten Schutzpfad verschalteter Filterkondensator, der zum Glätten einer Spannung am Energiespeicher eingerichtet ist, wirksam gegen ein Umschwingen der elektrischen Energie aus der Induktivität in den Filterkondensator abgesichert. Denn durch Schalten der ersten Schalt-Einrichtung kommutiert der Strom in den Schutzpfad und wird stetig abklingend abgebaut, wodurch ein Umschwingen in den Filterkondensator unterdrückt wird.

In einer alternativen zweiten Ausführungsform der Schaltungsanordnung, in der die erste Schalt-Einrichtung zwischen dem ersten Anschluss des Energiespeichers und der Induktivität des Stromrichters verschaltet ist, ist der erste Schutzpfad mit einer elektrischen Verbindung zwischen der ersten Schalt-Einrichtung und der Induktivität des Stromrichters und mit dem ersten Zwischenkreisanschluss des Stromrichters verbunden, wobei der erste Zwischenkreisanschluss sich vom zweiten Anschluss des Energiespeichers in Bezug auf ein elektrisches Potential unterscheidet.

Auch diese Ausführungsform hat den Effekt, dass bei Schalten der ersten Schalt-Einrichtung der erste Schutzpfad einen Freilaufpfad bildet, der die Energiespeicher-seitige Schalt-Einrichtung wirksam von dem durch die Induktivität weiter getriebenen Strom entlastet.

Ferner ist diese Ausführungsform für einen Ladebetrieb des Energiespeichers ausgelegt, in dem Strom aus dem Zwischenkreis entnommen wird und durch die Induktivität des Stromrichters sowie durch die erste Schalt-Einrichtung in Richtung des Energiespeichers fließt. Die erste Schalt-Einrichtung wird somit im Ladebetrieb des Energiespeichers, sowohl bei betrieblichem Abschalten als auch bei Abschalten in einem Fehlerfall, z. B. bei einem Kurzschluss im Energiespeicher oder den Leitungen dorthin, wirksam geschützt.

Zudem wird durch Einrichten des ersten Schutzpfades in dieser Ausführungsform ein zum Energiespeicher parallel geschalteter Filterkondensator der oben erläuterten Art wirksam gegen ein Umschwingen der elektrischen Energie aus der Induktivität in den Filterkondensator geschützt.

In einer auf der ersten Ausführungsform basierenden Ausgestaltung der Schaltungsanordnung weist diese neben dem ersten Schutzpfad einen zweiten Schutzpfad auf. Somit sind in dieser Ausführungsform zwei Schutzpfade in der Schaltungsanordnung eingerichtet. Auch im zweiten Schutzpfad ist eine zweite Freilaufdiode derart verschaltet, dass bei Überschreiten einer bestimmten Spannung an der ersten Schalt-Einrichtung durch Auslösen der ersten Schalt-Einrichtung die zweite Freilaufdiode im zweiten Schutzpfad leitend ist und ein Strom im Stromrichterkreis, der durch eine in der Induktivität gespeicherte elektrische Energie hervorgerufen wird, mittels der leitenden zweiten Freilaufdiode in den zweiten Schutzpfad kommutiert.

In dieser Ausgestaltung mit zwei Schutzpfaden ist der zweite Schutzpfad mit einer elektrischen Verbindung zwischen der ersten Schalt-Einrichtung und der Induktivität des Stromrichters und mit dem ersten Zwischenkreisanschluss des Stromrichters verbunden, wobei der erste Zwischenkreisanschluss sich vom zweiten Anschluss des Energiespeichers in Bezug auf ein elektrisches Potential unterscheidet.

In dieser Ausgestaltung ist die Schaltungsanordnung wirksam für einen Schutz der Schalt-Einrichtung sowohl in einem Ladebetrieb des Energiespeichers als auch in einem Entladebetrieb des Energiespeichers bzw. in einem entsprechenden Kurzschlussfall (Ladekurzschluss sowie Entladekurzschluss) eingerichtet. Somit ist diese Ausgestaltung als Variante für unterschiedliche Stromrichtungen im Stromrichterkreis (Ladebetrieb und Entladebetrieb) mit einer (Energiespeicher-seitigen) Schalt-Einrichtung eingerichtet und daher vorteilhaft flexibel einsetzbar.

In einer alternativen dritten Ausführungsformen der Schaltungsanordnung ist die erste Schalt-Einrichtung zwischen dem zweiten Anschluss des Energiespeichers und dem zweiten Zwischenkreisanschluss des Stromrichters verschaltet, während in der ersten und zweiten Ausführungsform die erste Schalt-Einrichtung jeweils zwischen dem ersten Anschluss des Energiespeichers und der Induktivität des Stromrichters verschaltet ist.

In einer Ausgestaltung der dritten Ausführungsform ist der erste Schutzpfad mit einer elektrischen Verbindung zwischen der ersten Schalt-Einrichtung und dem zweiten Anschluss des Energiespeichers und mit einer elektrischen Verbindung zwischen der Induktivität und dem ersten Zwischenkreisanschluss des Stromrichters verbunden. Diese Ausgestaltung stellt eine alternative Ausführungsform zum Schutz der Schalt-Einrichtung in einem Ladebetrieb des Energiespeichers dar.

In einer weiteren auf der ersten Ausführungsform basierenden Ausgestaltung weist die Schaltungsanordnung neben der ersten Schalt-Einrichtung eine zweite Schalt-Einrichtung auf. Es sind also zwei Schalt-Einrichtungen in der Schaltungsanordnung verschaltet. Die erste Schalt-Einrichtung ist zwischen dem ersten Anschluss des Energiespeichers und der Induktivität des Stromrichters verschaltet. Die zweite Schalt-Einrichtung ist zwischen dem zweiten Anschluss des Energiespeichers und dem zweiten Zwischenkreisanschluss des Stromrichters verschaltet. Durch Einrichten von zwei Schalt-Einrichtungen kann der Energiespeicher an beiden Anschlüssen potentialfrei vom Stromrichter getrennt werden.

In dieser Ausgestaltung mit zwei Schalt-Einrichtungen ist neben dem ersten Schutzpfad ein zweiter Schutzpfad eingerichtet. Auch im zweiten Schutzpfad ist eine zweite Freilaufdiode derart verschaltet, dass bei Überschreiten einer bestimmten Spannung an der zweiten Schalt-Einrichtung durch Auslösen der zweiten Schalt-Einrichtung die zweite Freilaufdiode im zweiten Schutzpfad leitend ist und ein Strom im Stromrichterkreis, der durch eine in der Induktivität gespeicherte elektrische Energie hervorgerufen wird, mittels der leitenden zweiten Freilaufdiode in den zweiten Schutzpfad kommutiert.

In dieser Ausgestaltung mit zwei Schutzpfaden ist der erste Schutzpfad mit einer elektrischen Verbindung zwischen der ersten Schalt-Einrichtung und der Induktivität des Stromrichters verbunden und mit dem zweiten Anschluss des Energiespeichers verbunden, während der zweite Schutzpfad mit einer elektrischen Verbindung zwischen der zweiten Schalt-Einrichtung und dem zweiten Anschluss des Energiespeichers und mit einer elektrischen Verbindung zwischen der Induktivität und dem ersten Zwischenkreisanschluss des Stromrichters verbunden ist.

In dieser Ausgestaltung ist die Schaltungsanordnung wirksam für einen jeweiligen Schutz der ersten und zweiten Schalt-Einrichtungen sowohl in einem Ladebetrieb des Energiespeichers als auch in einem Entladebetrieb des Energiespeichers bzw. in einem entsprechenden Kurzschlussfall (Ladekurzschluss sowie Entladekurzschluss) eingerichtet. Somit ist diese Ausführungsform als weitere Variante für unterschiedliche Stromrichtungen im Stromrichterkreis (Ladebetrieb und Entladebetrieb) mit zwei verschieden verschalteten Schalt-Einrichtungen eingerichtet und ebenfalls vorteilhaft flexibel einsetzbar.

In einer weiteren Ausführungsform der Schaltungsanordnung ist der Stromrichter eingerichtet
- eine Spannung zwischen dem ersten und zweiten Anschluss des Energiespeichers in eine Entladespannung zwischen dem ersten und zweiten Zwischenkreisanschluss des Stromrichters zu wandeln, wobei im Stromrichterkreis ein Entladestrom aus dem Energiespeicher entnehmbar ist, und/oder
- eine Ladespannung zwischen dem ersten und zweiten Zwischenkreisanschluss des Stromrichters in eine Spannung zwischen dem ersten und zweiten Anschluss des Energiespeichers zu wandeln, wobei im Stromrichterkreis ein Ladestrom in den Energiespeicher einspeisbar ist. Dies besitzt den Vorteil, dass der Stromrichter flexibel bidirektional sowohl für einen Ladebetrieb als auch einen Entladebetrieb des Energiespeichers bzw. für einen Bremsbetrieb oder einen Antriebsbetrieb eines Traktionssystems eingerichtet ist.

In einer weiteren Ausführungsform der Schaltungsanordnung ist der Energiespeicher eine Traktionsbatterie des elektrischen Fahrzeugs. Dadurch kann das Traktionssystem mit Energie aus dem Energiespeicher versorgt werden bzw. Energie in den Energiespeicher rückspeisen.

Die obige Aufgabe wird gemäß einem zweiten Aspekt durch ein elektrisches Schienenfahrzeug nach Patentanspruch 11 gelöst.

Das elektrische Schienenfahrzeug hat ein Traktionssystem zum Antrieb des Schienenfahrzeugs und eine Schaltungsanordnung gemäß einer der oben erläuterten Ausführungsformen. Die Schaltungsanordnung ist über den ersten und zweiten Zwischenkreisanschluss des Stromrichters an das Traktionssystem angeschlossen. Auch durch ein solches Fahrzeug ergeben sich die Vorteile und Effekte, wie sie oben im Zusammenhang mit der Schaltungsanordnung gemäß dem ersten Aspekt erläutert worden sind.

Die oben genannten Eigenschaften, Merkmale und Vorteile der Erfindung und die Art und Weise, wie diese erreicht werden, werden durch die folgende Beschreibung von Ausführungsbeispielen der Erfindung in Verbindung mit den entsprechenden Figuren weitergehend erläutert.

Es zeigen:
Figur 1 eine erste Ausführungsform einer Schaltungsanordnung für ein Traktionssystem,
Figur 2 eine zweite Ausführungsform einer Schaltungsanordnung für ein Traktionssystem,
Figur 3 eine dritte Ausführungsform einer Schaltungsanordnung für ein Traktionssystem und
Figur 4 ein elektrisches Schienenfahrzeug mit einer Schaltungsanordnung gemäß einer der Ausführungsformen in Figur 1 bis 3 und mit einem Traktionssystem.

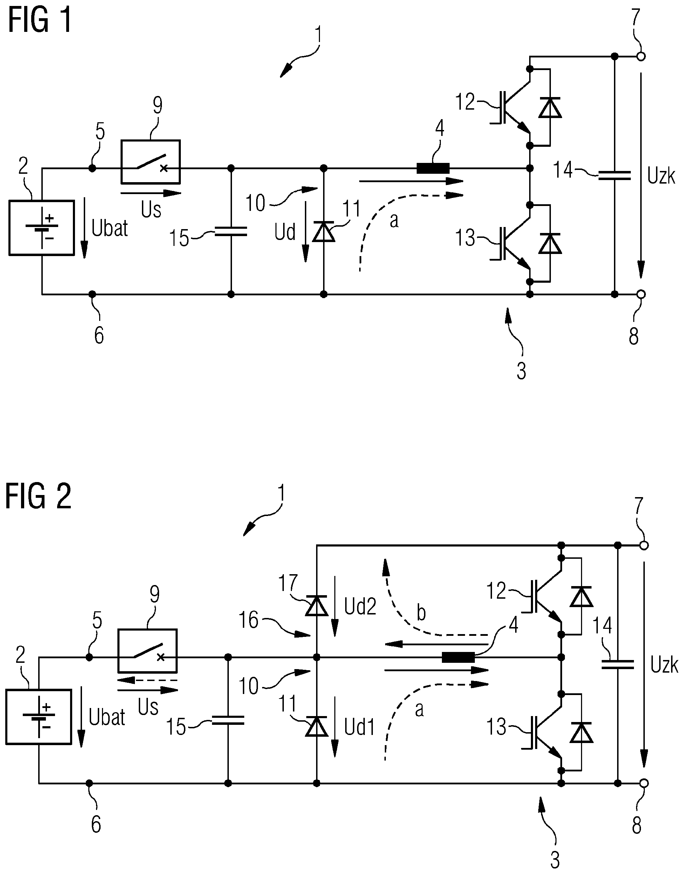

Figur 1 zeigt eine Schaltungsanordnung 1 für ein Traktionssystem, zum Beispiel für ein Traktionssystem eines elektrischen Fahrzeugs, insbesondere eines elektrischen Schienenfahrzeugs. Die Schaltungsanordnung 1 weist linksseitig einen Energiespeicher 2 auf, der über einen ersten Anschluss 5 und einen zweiten Anschluss 6 mit einem Stromrichter 3 zu einem Stromrichterkreis verschaltet ist. Der Stromrichter 3 weist eine Induktivität 4, ein erstes Schaltelement (Schalter) 12 und ein zweites Schaltelement (Schalter) 13 sowie einen Zwischenkreiskondensator 14 auf. Die Schalter 12 und 13 des Stromrichters 3 umfassen in der Ausführungsform gemäß Figur 1 jeweils einen Transistorschalter (zum Beispiel einen Bipolartransistor mit isolierter Gate-Elektrode, englisch: insulated-gate bipolar transistor, IGBT) und eine dazu parallel geschaltete Freilaufdiode. Durch Schalten der Schalter 12 und 13 in einer oder mehreren vorbestimmten Taktfrequenzen bzw. Ein/Aus-Zyklen (englisch: duty cycle) erfolgt in Verbindung mit der Induktivität 4 eine Spannungswandlung beziehungsweise ein Stromrichten zwischen dem Energiespeicher 2 und dem Zwischenkreiskodensator 14. Der Stromrichter 3 ist in der Ausführungsform gemäß Figur 1 zum Beispiel ein bidirektional betreibbarer Hoch-/Tiefsetzsteller zum Aufwärtswandeln einer Spannung Ubat zwischen dem ersten und zweiten Anschluss 5 und 6 am Energiespeicher 2 in eine höhere Zwischenkreisspannung Uzk zwischen einem ersten Zwischenkreisanschluss 7 und einem zweiten Zwischenkreisanschluss 8 des Stromrichters 3 beziehungsweise zum Abwärtswandeln der Zwischenkreisspannung Uzk in die Spannung Ubat am Energiespeicher 2. In der Ausführungsform gemäß Figur 1 beträgt eine Spannung Ubat am Energiespeicher 2 zum Beispiel 1000 Volt, während eine Zwischenkreisspannung Uzk an den Zwischenkreisanschlüssen 7 und 8 1500 Volt beträgt.

Über die ersten und zweiten Zwischenkreisanschlüsse 7 und 8 ist die Schaltungsanordnung 1 mit einem Zwischenkreis eines Traktionssystems (zum Beispiel ein Elektromotor) eines elektrischen Fahrzeuges verschaltbar. In einem Entladebetrieb der Schaltungsanordnung 1 (Antreiben des Traktionssystems) wird elektrische Energie aus dem Energiespeicher 2 über die Schaltungsanordnung 1 an den Zwischenkreisanschlüssen 7 und 8 in den Zwischenkreis transferiert. In einem umgekehrten Ladebetrieb der Schaltungsanordnung 1 (Bremsen des Traktionssystems) wird elektrische Energie an den ersten und zweiten Zwischenkreisanschlüssen 7 und 8 aus dem Zwischenkreis über den Stromrichter 3 in den Energiespeicher 2 transferiert.

Somit fließt im betrieblichen Einsatz sowohl im Ladebetrieb als auch im Endladebetrieb der Schaltungsanordnung 1 stets ein elektrischer Strom durch die Induktivität 4. Zum Glätten von Restwelligkeiten einer Spannung, welche aufgrund induktiver Vorgänge an der Induktivität 4 und/oder aufgrund von Schaltvorgängen an den Schaltern 12 und 13 des Stromrichters 3 auftreten, und zum Erzeugen einer geglätteten bzw. gefilterten Spannung Ubat am Energiespeicher 2 ist in der Schaltungsanordnung 1 gemäß der Ausführungsform aus Figur 1 ein Filterkondensator 15 verschaltet. Der Filterkondensator 15 ist in der Ausführungsform gemäß Figur 1 rechtsseitig neben einer Schalt-Einrichtung 9 verschaltet. Die Schalt-Einrichtung 9 ist in der Ausführungsform gemäß Figur 1 ein Schalter. In einer alternativen Ausführungsform ist die Schalt-Einrichtung 9 eine Sicherung, zum Beispiel, eine Schmelzsicherung. Bei geschlossener Schalt-Einrichtung 9 fällt an dieser praktisch keine Spannung ab, wodurch der Filterkondensator 15 quasi parallel zu den ersten und zweiten Anschlüssen 5 und 6 des Energiespeichers 2 geschaltet ist.

Die Schalt-Einrichtung 9 dient zum Schalten der Schaltungsanordnung 1. Eine Schaltung kann betrieblich erforderlich sein, um die Schaltungsanordnung 1 entsprechend auszuschalten. Es kann jedoch auch ein außergewöhnlicher Fehlerfall auftreten, bei dem zum Beispiel einer oder beide der Schalter 12 und 13 des Stromrichters 3 versagen und zu Kurzschlüssen führen. Tritt beispielsweise ein Kurzschluss im Schalter 12 auf, so liegt im Ladebetrieb ein Ladekurzschluss zwischen dem Energiespeicher 2 und dem Zwischenkreis des Traktionssystems vor. Tritt zum Beispiel ein Kurzschluss im Schalter 13 auf, so liegt im Endladebetrieb ein Endladekurzschluss im Stromrichterkreis vor. Auch in derartigen Fehlerfällen dient die Schalt-Einrichtung 9 zum Schalten der Schaltungsanordnung 1.

Wie oben erläutert, fließt immer auch Strom durch die Induktivität 4, wobei insbesondere in Fehlerfällen, aber auch in betrieblichen Zuständen eines Ladebetriebes beziehungsweise eines Entladebetriebes, elektrische Energie in der Induktivität 4 gespeichert wird. Dies hat zur Folge, dass bei Auslösen beziehungsweise Öffnen der Schalt-Einrichtung 9 an dieser eine (unter Umständen sehr hohe) Schaltspannung beziehungsweise Brennspannung Us abfällt, wodurch Lichtbögen an der Schalt-Einrichtung 9 aufgrund der hohen Energien in der Schaltungsanordnung 1 entstehen. Ohne weitere Maßnahmen wird die Schalt-Einrichtung 9 daher beim Schalten mit zum Teil sehr hohen Energien und Überspannungen aus der Induktivität 4 belastet, wobei die Induktivität 4 bei Schalten der Schalt-Einrichtung 9 einen durch die Induktivität 4 fließenden Strom zunächst weiter treibt. Eine derartige Belastung der Schalt-Einrichtung 9 kann zu deren Überlastung beziehungsweise Zerstörung führen. Ebenso kann ein Umschwingen beziehungsweise Hin- und Herschwingen der elektrischen Energie zwischen der Induktivität 4 und dem Filterkondensator 15 auftreten, was zur Zerstörung beziehungsweise Beschädigung weiterer Schaltungskomponenten in der Schaltungsanordnung 1 führen kann.

Zum Absichern der Schalt-Einrichtung 9 und zum Vermeiden eines erläuterten Umschwingens elektrischer Energie zwischen der Induktivität 4 und dem Filterkondensator 15 (und schließlich zum Schutz des Filterkondensators 15) weist die Schaltungsanordnung 1 in der Ausführungsform gemäß Figur 1 einen Schutzpfad 10 mit einer darin verschalteten Freilaufdiode 11 auf. Der Schutzpfad 10 ist in der Ausführungsform gemäß Figur 1 parallel zum Filterkondensator 15 geschaltet. Somit ist auch die Freilaufdiode 11 parallel zum Filterkondensator 15 geschaltet. Allgemein gesprochen weist der Schutzpfad 10 eine erste elektrische Verbindung mit einer Leitung zwischen der Schalt-Einrichtung 9 und der Induktivität 4 auf und weist eine zweite elektrische Verbindung mit einer Leitung zwischen dem zweiten Anschluss 6 des Energiespeichers 2 und dem zweiten Zwischenkreisanschluss 8 des Stromrichters 3 auf. Die Schalt-Einrichtung 9 ist in der Ausführungsform gemäß Figur 1 somit linksseitig vom Schutzpfad 10 in einer Leitung zwischen dem ersten Anschluss 5 des Energiespeichers 2 und der Induktivität 4 verschaltet.

Im Normalbetrieb der Schaltungsanordnung 1 bei geschlossener (leitender) Schalt-Einrichtung 9 liegt somit an der Freilaufdiode 11 im Schutzpfad 10 eine Spannung Ud an, die der Spannung Ubat am Energiespeicher 2 zwischen den Anschlüssen 5 und 6 bzw. der Spannung am Filterkondensator 15 entspricht. In diesem Fall beträgt Us an der Schalt-Einrichtung 9 quasi 0 Volt. Im Normalbetrieb wird die Freilaufdiode 11 somit in Sperrrichtung betrieben, wodurch ein Stromfluss durch die Freilaufdiode 11 verhindert wird und elektrische Energie zwischen dem Energiespeicher 2 und den Zwischenkreisanschlüssen 7 und 8, wie oben erläutert, ausgetauscht werden kann. Bei Auslösen bzw. Schalten oder Öffnen der Schalt-Einrichtung 9 wird eine elektrische Verbindung im Stromrichterkreis an der Schalt-Einrichtung 9 eröffnet. Dadurch fällt an der Schalt-Einrichtung 9 im laufenden Betrieb eine Spannung Us > 0 Volt ab. Hierdurch kann bereits ein kleiner Lichtbogen an der Schalt-Einrichtung 9 entstehen. Sobald die Spannung Us an der Schalt-Einrichtung 9 die Spannung Ubat am Energiespeicher 2 aufgrund eines durch die Induktivität 4 weitergetriebenen Stromes, in der Konstellation gemäß Figur 1 konkret eines durch die Induktivität 4 fließenden Entladestromes aus dem Energiespeicher 2 in Richtung des Zwischenkreises (wie mit einem Pfeil an der Induktivität 4 angedeutet), übersteigt, wird die Spannung Ud an der Freilaufdiode 11 negativ (Ud < 0 Volt). Ab diesem Zeitpunkt wird die Freilaufdiode 11 leitend (aufgrund der negativen Spannung Ud wird diese nunmehr in Durchlassrichtung betrieben).

Wegen der leitenden Freilaufdiode 11 wird der Schutzpfad 11 somit aktiv bzw. leitend, sodass ein Freilaufpfad am Schutzpfad 10 und der Induktivität 11 gebildet ist. Der von der Induktivität 4 weitergetriebene Strom (Entladestrom) kommutiert auf diese Weise von der Schalt-Einrichtung 9 in den Schutzpfad 10 mittels der leitenden Freilaufdiode 11. In dem zwischen dem Schutzpfad 10 und der Induktivität 4 gebildeten Freilaufpfad (angedeutet durch den Pfad "a" in Figur 1) wird somit die Schalt-Einrichtung 9 von der in der Induktivität 4 gespeicherten elektrischen Energie entlastet. Ein an der Schalt-Einrichtung 9 etwaig entstandener Lichtbogen wird nicht energiereicher bzw. erlischt, wodurch ein weiteres Abbrennen an den Kontakten der Schalt-Einrichtung 9 verhindert wird. Im durch den Schutzpfad 10 gebildeten Freilaufpfad fließt der von der Induktivität 4 weitergetriebene Strom kontinuierlich abklingend weiter, bis die in der Induktivität 4 gespeicherte Energie in den durch die Komponenten gebildeten parasitären Widerständen (Freilaufdiode 11, Induktivität 4, elektrische Leitungen) abgebaut ist.

Auf diese Weise wird die Schalt-Einrichtung 9 sowie der Filterkondensator 15 von der in der Induktivität 4 gespeicherten Entladeenergie in der Konstellation der Schaltungsanordnung 1 gemäß Figur 1 entlastet. Die Konstellation gemäß Figur 1 ist für eine betriebliche Abschaltung im Entladebetrieb als auch für eine Schaltung in einem Fehlerfall, insbesondere bei Auftreten eines Entladekurzschluss durch Fehler am Schalter 13 des Stromrichters 3 ausgelegt. Die Freilaufdiode 11 ist z. B. eine Scheibendiode, die mittels Schrauben oder einer Einspannung angeschlossen ist. Die Freilaufdiode 11 ist je nach Anwendung der Schaltungsanordnung 1 auf ein auftretendes Strommaximum und eine Grenzlast I²t ausgelegt.

Figur 2 zeigt eine zweite Ausführungsform einer Schaltungsanordnung 1. Die mit gleichen Bezugszeichen versehenen Komponenten entsprechen den Komponenten und ihren Funktionen, wie sie zu der Ausführungsform der Schaltungsanordnung 1 gemäß Figur 1 erläutert worden sind. Zusätzlich zur Ausführungsform der Schaltungsanordnung 1 gemäß Figur 1 weist die Schaltungsanordnung 1 in der Ausführungsform gemäß Figur 2 einen weiteren Schutzpfad 16 neben dem ersten Schutzpfad 10 auf. Konkret weist der weitere Schutzpfad 16 eine erste elektrische Verbindung mit einer Leitung zwischen der Schalt-Einrichtung 9 und der Induktivität 4 und eine weitere elektrische Verbindung am ersten Zwischenkreisanschluss 7 des Stromrichters 3 auf. Der weitere Schutzpfad 16 weist eine weitere Freilaufdiode 17 auf. Die weitere Freilaufdiode 17 ist in der Ausführungsform gemäß Figur 2 analog zur ersten Freilaufdiode 11 aufgebaut und entsprechend dem Anwendungsfall ausgelegt.

Im Unterschied zu einer Schutzfunktion des ersten Schutzpfades 10 für einen Entladebetrieb des Energiespeichers 2 dient der weitere Schutzpfad 16 einer Schutzfunktion in einem Ladebetrieb der Schaltungsanordnung 1, wobei elektrische Energie an den Zwischenkreisanschlüssen 7 und 8 des Stromrichters 3 in Richtung des Energiespeichers 2 transferiert wird, sodass ein elektrischer Strom im Stromrichter 3, insbesondere an der Induktivität 4, aus dem Zwischenkreis (mittels der Zwischenkreisspannung Uzk an den Zwischenkreisanschlüssen 7 und 8) in Richtung des Energiespeichers 2 fließt, was in der Ausführungsform gemäß Figur 2 durch einen oberen Pfeil an der Induktivität 4 verdeutlicht ist.

Bei geschlossener Schalt-Einrichtung 9 in der Ausführungsform gemäß Figur 2 liegt an der weiteren Freilaufdiode 17 eine Spannung Ud2 an, sodass die weitere Freilaufdiode 17 im Normalbetrieb in Sperrrichtung verschaltet ist. Auf diese Weise verhindert die Freilaufdiode 17 im Normalbetrieb einen Bypass vom ersten Zwischenkreisanschluss 7 in Richtung des Energiespeichers 2 beziehungsweise ein Rückspeisen elektrischer Energie aus der Induktivität 4 über die Freilaufdiode 17 zurück in den Zwischenkreis. Sobald jedoch die Schalt-Einrichtung 9 ausgelöst bzw. geschaltet oder geöffnet wird, fällt an der Schalt-Einrichtung 9 eine Spannung Us ab, die wegen des Ladestromflusses im Unterschied zur Konstellation gemäß Figur 1 ein umgekehrtes Vorzeichen zur dortigen Spannung Us besitzt. Dies ist durch einen gestrichelten Spannungspfeil Us an der Schalt-Einrichtung 9 gemäß der Konstellation in Figur 2 dargestellt. Sobald die Spannung Us an der Schalt-Einrichtung 9 so groß wird, dass die Differenz Uzk - (Us + Ubat) negativ wird, so wird die Spannung Ud2 an der weiteren Freilaufdiode 17 negativ. Ab diesem Moment wird die Freilaufdiode 17 leitend und bildet einen leitenden Schutzpfad 16. Dadurch wird ein Freilaufpfad (angedeutet durch den Pfad "b" in Figur 2) zwischen der Induktivität 4 und dem weiteren Schutzpfad 16 gebildet, sodass die in der Induktivität 4 gespeicherte Ladeenergie über den leitenden Schutzpfad 16 abgebaut werden kann und die Schalt-Einrichtung 9 entlastet. Konkret fließt ein durch die Induktivität 4 weiter getriebener Ladestrom über den leitenden Schutzpfad 16 in Richtung des ersten Zwischenkreisanschlusses 7 kontinuierlich abklingend in den Zwischenkreis zurück (gepuffert über den Zwischenkreiskondensator 14), bis die in der Induktivität 4 gespeicherte Ladeenergie in den von den Komponenten gebildeten parasitären Widerständen (Freilaufdiode 17, Induktivität 4, elektrische Leitung) abgebaut ist. Auf diese Weise wird die Schalt-Einrichtung 9 in einem Ladebetrieb gemäß der Konstellation gemäß Figur 2 von der in der Induktivität 4 gespeicherten Energie entlastet.

Daneben ist die Ausführungsform der Schaltungsanordnung 1 gemäß Figur 2 über den Schutzpfad 10 mit der Freilaufdiode 11 entsprechend für eine Schutzfunktion in einem Entladebetrieb ausgelegt, wie zu Figur 1 oben erläutert worden ist. Die Ausführungsform der Schaltungsanordnung 1 gemäß Figur 2 stellt somit eine Variante für eine Schutzfunktion sowohl in einem Ladebetrieb als auch in einem Entladebetrieb dar. Bei Stromrichtung Entladen (Freilaufpfad "a") kommutiert der Entladestrom bei Auslösen bzw. Schalten oder Öffnen der Schalt-Einrichtung 9 auf die Freilaufdiode 11 und entlastet damit die Schalt-Einrichtung von der Entladeenergie, die in der Induktivität 4 gespeichert ist. Bei Stromrichtung Laden (Freilaufpfad "b") kommutiert der Ladestrom bei Auslösen bzw. Schalten oder Öffnen der Schalt-Einrichtung 9 auf die Freilaufdiode 17 und entlastet damit die Schalt-Einrichtung 9 von der Energie, die in der Induktivität 4 gespeichert ist. Auch in einem Fehlerfall, bei dem der Schalter 12 des Stromrichters 3 versagt und einen Kurzschluss erzeugt (Ladekurzschluss) findet die Konstellation gemäß Figur 2 vorteilhaft Anwendung.

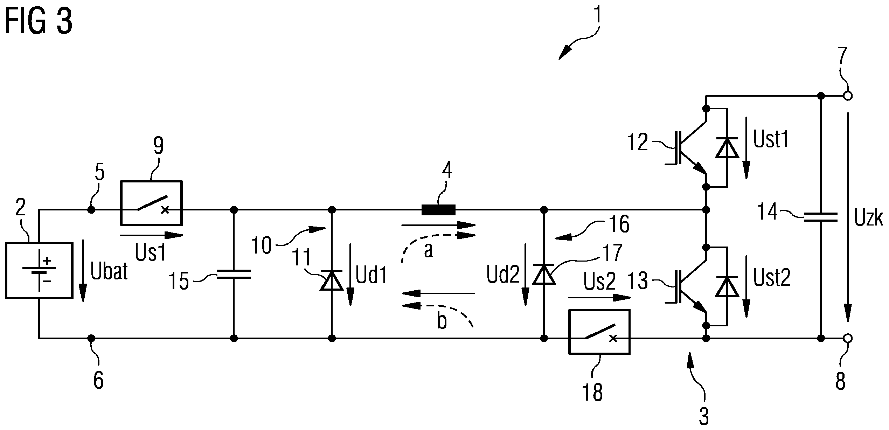

Figur 3 zeigt eine dritte Ausführungsform einer Schaltungsanordnung 1. Die mit gleichen Bezugszeichen versehenen Komponenten weisen gleiche Komponenten beziehungsweise Funktionalitäten auf, wie sie im Zusammenhang mit den Ausführungsformen der Figuren 1 und 2 erläutert worden sind.

Im Unterschied zu den Ausführungsformen gemäß den Figuren 1 und 2 ist in der Ausführungsform der Schaltungsanordnung 1 gemäß Figur 3 neben der Schalt-Einrichtung 9 eine zweite Schalt-Einrichtung 18 vorgesehen. Diese ist zwischen dem zweiten Anschluss 6 des Energiespeichers 2 und dem zweiten Zwischenkreisanschluss 8 des Stromrichters 3 verschaltet. In der Ausführungsform gemäß Figur 3 dient die Schalt-Einrichtung 9, wie oben erläutert, einem Schalten der Schaltungsanordnung 1 in einem Entladebetrieb, in dem Strom aus dem Energiespeicher 2 in Richtung des Zwischenkreises durch die Induktivität 4 fließt. In dieser Konstellation mit Stromrichtung Entladen (Freilaufpfad "a") wird die Freilaufdiode 11, wie oben zu den Ausführungsformen gemäß Figuren 1 und 2 erläutert, leitend, sodass der Entladestrom bei Auslösen bzw. Schalten oder Öffnen der Schalt-Einrichtung 9 auf die Freilaufdiode 11 kommutiert und die Schalt-Einrichtung 9 damit von der Energie entlastet, die in der Induktivität 4 gespeichert ist. In diesem Fall bleibt die weitere Schalt-Einrichtung 18 geschlossen.

Die weitere Schalt-Einrichtung 18 dient in der Ausführungsform der Schaltungsanordnung 1 gemäß Figur 3 einer Schutzfunktion für einen Ladebetrieb. Für diese Schutzfunktion ist eine weitere Freilaufdiode 17 in einem weiteren Schutzpfad 16 verschaltet, der im Unterschied zur Ausführungsform gemäß Figur 2 nun eine erste elektrische Verbindung mit einer Leitung zwischen der Induktivität 4 und dem ersten Zwischenkreisanschluss 7 (über den Schalter 12) aufweist und eine zweite elektrische Verbindung mit einer Leitung zwischen dem zweiten Anschluss 6 des Energiespeichers 2 und der weiteren Schalt-Einrichtung 18 aufweist. Im Normalbetrieb liegt an der weiteren Freilaufdiode 17 eine Spannung Ud2 an, sodass die weitere Freilaufdiode 17 in Sperrrichtung betrieben wird. Auf diese Weise wird verhindert, dass ein Ladestrom aus dem Zwischenkreis (mittels der Zwischenkreisspannung Uzk) über den weiteren Schutzpfad 16 abgeleitet wird. Vielmehr wird die Energie im Normalbetrieb (Ladebetrieb) über die Induktivität 4 des Stromrichters 3 in den Energiespeicher 2 transferiert.

Durch Auslösen bzw. Schalten oder Öffnen der weiteren Schalt-Einrichtung 18 zum Schalten der Schaltungsanordnung 1 gemäß Figur 3 im Ladebetrieb fällt an der weiteren Schalt-Einrichtung 18 eine Spannung Us2 ab, wie in Figur 3 verdeutlicht. Übersteigt diese Spannung Us2 eine Spannung, sodass die Differenz Uzk - (Ustl + Us2) negativ wird, so wird die Spannung Ud2 an der weiteren Freilaufdiode 17 negativ, wodurch die weitere Freilaufdiode 17 leitend wird. Auf diese Weise wird der weitere Schutzpfad 16 leitend und bildet mit der Induktivität 4 einen Freilaufpfad "b", wie in Figur 3 angedeutet. Bei Stromrichtung Laden (Freilaufpfad "b") kommutiert somit der Ladestrom beim Auslösen bzw. Schalten oder Öffnen der weiteren Schalt-Einrichtung 18 auf die Freilaufdiode 17 und entlastet damit die weitere Schalt-Einrichtung 18 von der Energie, die in der Induktivität 4 gespeichert ist. Die Schalt-Einrichtung 9 bleibt in dieser Konstellation geschlossen.

Auf diese Weise bildet die Ausführungsform der Schaltungsanordnung 1 gemäß Figur 3 eine Variante sowohl für einen Ladebetrieb als auch für einen Entladebetrieb, wobei sowohl die Schalt-Einrichtung 9 als auch die Schalt-Einrichtung 18 im entsprechenden Betrieb von der in der Induktivität 4 gespeicherten Energie entlastet werden können.

Die Ausführungsform gemäß Figur 3 hat den weiteren Effekt, dass durch aufeinanderfolgendes Öffnen der Schalt-Einrichtungen 9 und 18 (z. B. erst Öffnen von 9 und dann Öffnen von 18) der Energiespeicher 2 vollständig potentialfrei vom Stromrichter 3 geschaltet werden kann.

Die Ausführungsform der Schaltungsanordnung 1 gemäß Figur 3 findet ebenso, wie zu Ausführungsform gemäß Figur 2 erläutert, Anwendung für Fehlerfälle, in denen einer der Schalter 12 oder 13 einen Kurzschluss (Ladekurzschluss beziehungsweise Entladekurzschluss) verursacht.

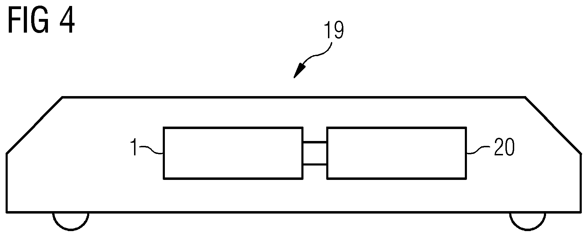

Figur 4 zeigt schematisiert eine Ausführungsform eines elektrischen Schienenfahrzeugs 19, wie einem Zug, eine Straßenbahn oder ähnliches. Das Schienenfahrzeug 19 weist eine Schaltungsanordnung 1 auf, die beispielhaft gemäß einer der Ausführungsformen der Figuren 1 bis 3, wie oben erläutert, eingerichtet ist. Die Schaltungsanordnung 1 ist an den Zwischenkreisanschlüssen 7 und 8 (siehe obige Erläuterungen) mit einem Traktionssystem 20 des Schienenfahrzeugs 19 verschaltet. Das Traktionssystem 20 umfasst zum Beispiel einen Elektromotor zum Antrieb des Schienenfahrzeugs 19. Unter Einsatz der Schaltungsanordnung 1, wie zu den Ausführungsformen der Figuren 1 bis 3 oben erläutert, kann das Schienenfahrzeug 19 kostengünstig und sicher konstruiert und betrieben werden.

In alternativen Ausführungsformen wird anstelle einer Freilaufdiode 11 bzw. 17 ein Überspannungsbegrenzer, wie z. B. ein Varistor, eine Zener-Diode oder eine Schaltung aus Zener-Diode und Transistor-Schalter eingesetzt. In alternativen Ausführungsformen ist das Fahrzeug 19 ein elektrisch betriebenes Kraftfahrzeug.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: Schaltungsanordnung
- 2: Energiespeicher
- 3: Stromrichter
- 4: Induktivität
- 5: erster Anschluss
- 6: zweiter Anschluss
- 7: erster Zwischenkreisanschluss
- 8: zweiter Zwischenkreisanschluss
- 9: Schalt-Einrichtung
- 10: Schutzpfad
- 11: Freilaufdiode
- 12: Schalter
- 13: Schalter
- 14: Zwischenkreiskondensator
- 15: Filterkondensator
- 16: Schutzpfad
- 17: Freilaufdiode
- 18: Schalt-Einrichtung
- 19: elektrisches Schienenfahrzeug
- 20: Traktionssystem
- Ubat: Spannung am Energiespeicher
- Us, Us1, Us2: Spannung an der Schalt-Einrichtung
- Ud, Ud1, Ud2: Spannung an der Freilaufdiode
- Uzk: Spannung am Zwischenkreis
- Ust1, Ust2: Spannung am Schalter des Stromrichters
- a, b: Freilaufpfad

## Patentansprüche

1. Schaltungsanordnung (1) für ein Traktionssystem (20) eines elektrischen Fahrzeugs (19), aufweisend:
- einen elektrischen Energiespeicher (2),
- einen Stromrichter (3), der eine Induktivität (4) aufweist, wobei der Stromrichter (3) über einen ersten Anschluss (5) und einen zweiten Anschluss (6) mit dem Energiespeicher (2) elektrisch zu einem Stromrichterkreis verschaltet ist und wobei der Stromrichter (3) einen ersten Zwischenkreisanschluss (7) und einen zweiten Zwischenkreisanschluss (8) zum Anschluss an das Traktionssystem (20) aufweist,
- eine erste Schalt-Einrichtung (9, 18), die im Stromrichterkreis verschaltet ist, und
- einen ersten Schutzpfad (10, 16),
wobei im Schutzpfad (10, 16) eine erste Freilaufdiode (11, 17) derart verschaltet ist, dass bei Überschreiten einer bestimmten Spannung (Us) an der ersten Schalt-Einrichtung (9, 18) durch Auslösen der ersten Schalt-Einrichtung (9, 18) die erste Freilaufdiode (11, 17) im ersten Schutzpfad (10, 16) leitend ist und ein Strom im Stromrichterkreis, der durch eine in der Induktivität (4) gespeicherte elektrische Energie hervorgerufen wird, mittels der leitenden ersten Freilaufdiode (11, 17) in den ersten Schutzpfad (10, 16) kommutiert.

2. Schaltungsanordnung (1) nach Anspruch 1, wobei die erste Schalt-Einrichtung (9) zwischen dem ersten Anschluss (5) des Energiespeichers (2) und der Induktivität (4) des Stromrichters (3) verschaltet ist.

3. Schaltungsanordnung (1) nach Anspruch 2, wobei der erste Schutzpfad (10) mit einer elektrischen Verbindung zwischen der ersten Schalt-Einrichtung (9) und der Induktivität (4) des Stromrichters verbunden ist und mit dem zweiten elektrischen Anschluss (6) des Energiespeichers (2) verbunden ist.

4. Schaltungsanordnung (1) nach Anspruch 2, wobei der erste Schutzpfad (10) mit einer elektrischen Verbindung zwischen der ersten Schalt-Einrichtung (9) und der Induktivität (4) des Stromrichters und mit dem ersten Zwischenkreisanschluss (7) des Stromrichters (3) verbunden ist, wobei der erste Zwischenkreisanschluss (7) sich vom zweiten Anschluss (6) des Energiespeichers (2) in Bezug auf ein elektrisches Potential unterscheidet.

5. Schaltungsanordnung nach Anspruch 3, aufweisend einen zweiten Schutzpfad (16), wobei im zweiten Schutzpfad (16) eine zweite Freilaufdiode (17) derart verschaltet ist, dass bei Überschreiten einer bestimmten Spannung (Us) an der ersten Schalt-Einrichtung (9) durch Auslösen der ersten Schalt-Einrichtung (9) die zweite Freilaufdiode (17) leitend ist und ein Strom im Stromrichterkreis, der durch eine in der Induktivität (4) gespeicherte elektrische Energie hervorgerufen wird, mittels der leitenden zweiten Freilaufdiode (17) in den zweiten Schutzpfad (16) kommutiert, wobei der zweite Schutzpfad (16) mit einer elektrischen Verbindung zwischen der ersten Schalt-Einrichtung (9) und der Induktivität (4) des Stromrichters (3) und mit dem ersten Zwischenkreisanschluss (7) des Stromrichters (3) verbunden ist, wobei der erste Zwischenkreisanschluss (7) sich vom zweiten Anschluss (6) des Energiespeichers (2) in Bezug auf ein elektrisches Potential unterscheidet.

6. Schaltungsanordnung (1) nach Anspruch 1, wobei die erste Schalt-Einrichtung (18) zwischen dem zweiten Anschluss (6) des Energiespeichers (2) und dem zweiten Zwischenkreisanschluss (8) des Stromrichters (3) verschaltet ist.

7. Schaltungsanordnung (1) nach Anspruch 6, wobei der erste Schutzpfad (16) mit einer elektrischen Verbindung zwischen der ersten Schalt-Einrichtung (18) und dem zweiten Anschluss (6) des Energiespeichers (2) und mit einer elektrischen Verbindung zwischen der Induktivität (4) und dem ersten Zwischenkreisanschluss (7) des Stromrichters (3) verbunden ist.

8. Schaltungsanordnung (1) nach Anspruch 3, aufweisend:
- eine zweite Schalt-Einrichtung (18), die im Stromrichterkreis verschaltet ist, wobei die zweite Schalt-Einrichtung (18) zwischen dem zweiten Anschluss (6) des Energiespeichers (2) und dem zweiten Zwischenkreisanschluss (8) des Stromrichters (3) verschaltet ist, und
- einen zweiten Schutzpfad (16), wobei im zweiten Schutzpfad (16) eine zweite Freilaufdiode (17) derart verschaltet ist, dass bei Überschreiten einer bestimmten Spannung (Us2) an der zweiten Schalt-Einrichtung (18) durch Auslösen der zweiten Schalt-Einrichtung (18) die zweite Freilaufdiode (17) leitend ist und ein Strom im Stromrichterkreis, der durch eine in der Induktivität (4) gespeicherte elektrische Energie hervorgerufen wird, mittels der leitenden zweiten Freilaufdiode (17) in den zweiten Schutzpfad (16) kommutiert, wobei der zweite Schutzpfad (16) mit einer elektrischen Verbindung zwischen der zweiten Schalt-Einrichtung (18) und dem zweiten Anschluss (6) des Energiespeichers (2) und mit einer elektrischen Verbindung zwischen der Induktivität (4) und dem ersten Zwischenkreisanschluss (7) des Stromrichters (3) verbunden ist.

9. Schaltungsanordnung (1) nach einem der Ansprüche 1 bis 8, wobei der Stromrichter (3) eingerichtet ist
- eine Spannung (Ubat) zwischen dem ersten und zweiten Anschluss (5, 6) des Energiespeichers (2) in eine Entladespannung (Uzk) zwischen dem ersten und zweiten Zwischenkreisanschluss (7, 8) des Stromrichters (3) zu wandeln, wobei im Stromrichterkreis ein Entladestrom aus dem Energiespeicher (2) entnehmbar ist, und/oder
- eine Ladespannung (Uzk) zwischen dem ersten und zweiten Zwischenkreisanschluss (7, 8) des Stromrichters (3) in eine Spannung (Ubat) zwischen dem ersten und zweiten Anschluss (5, 6) des Energiespeichers (2) zu wandeln, wobei im Stromrichterkreis ein Ladestrom in den Energiespeicher (2) einspeisbar ist.

10. Schaltungsanordnung (1) nach einem der Ansprüche 1 bis 9, wobei der Energiespeicher (2) eine Traktionsbatterie des elektrischen Fahrzeugs ist.

11. Elektrisches Schienenfahrzeug (19), mit einem Traktionssystem (20) zum Antrieb des Schienenfahrzeugs (19) und mit einer Schaltungsanordnung (1) nach einem der Ansprüche 1 bis 10, wobei die Schaltungsanordnung (1) über den ersten und zweiten Zwischenkreisanschluss (7, 8) des Stromrichters (3) an das Traktionssystem (20) angeschlossen ist.
